(19) Europäisches Patentamt

European Patent Office

Office européen des brevets

(11) EP 1 543 876 A1

## (12) EUROPEAN PATENT APPLICATION
published in accordance with Art. 158(3) EPC

(43) Date of publication:
22.06.2005 Bulletin 2005/25

(51) Int Cl.$^7$: **B01J 35/04**, B01J 32/00, B01J 37/00, B01D 53/86

(21) Application number: 03798388.9

(22) Date of filing: 04.09.2003

(86) International application number:
PCT/JP2003/011309

(87) International publication number:
WO 2004/028690 (08.04.2004 Gazette 2004/15)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 25.09.2002 JP 2002278657

(71) Applicant: NGK INSULATORS, LTD.
Nagoya-shi, Aichi-ken 467-8530 (JP)

(72) Inventor: HIRAI, Sadaaki,
c/o NGK INSULATORS, LTD.
Nagoya-shi, Aichi 467-8530 (JP)

(74) Representative: Paget, Hugh Charles Edward et al
Mewburn Ellis LLP
York House
23 Kingsway
London WC2B 6HP (GB)

## (54) HONEYCOMB CATALYST CARRIER AND METHOD FOR PRODUCTION THEREOF

(57)     A honeycomb catalyst carrier 5 of the present invention includes: a honeycomb formed cell structure 1 which is composed of a porous material having a large number of pores and has cells each functioning as a fluid passage; and an outer wall 6 composed of a porous material disposed so as to cover an outer periphery of the cell structure 1. An impregnated part 1a impregnated with a water-insoluble organic material which disappears by burning or an inorganic material is formed in an outermost peripheral part, which has a given thickness, of the porous material of the cell structure 1.

FIG.1

**Description**

TECHNICAL FIELD

The present invention relates to a honeycomb catalyst carrier comprising a honeycomb formed cell structure having cells each functioning as a fluid passage and an outer wall disposed so as to cover an outer periphery of the cell structure, and a method for production thereof. Specifically, the present invention relates to a honeycomb catalyst carrier which can effectively be inhibited from crack generation at the outer wall and from exfoliation of the outer wall as well as can have a uniform concentration distribution of a catalyst component in each part of the catalyst carrier and a method for production thereof.

BACKGROUND ART

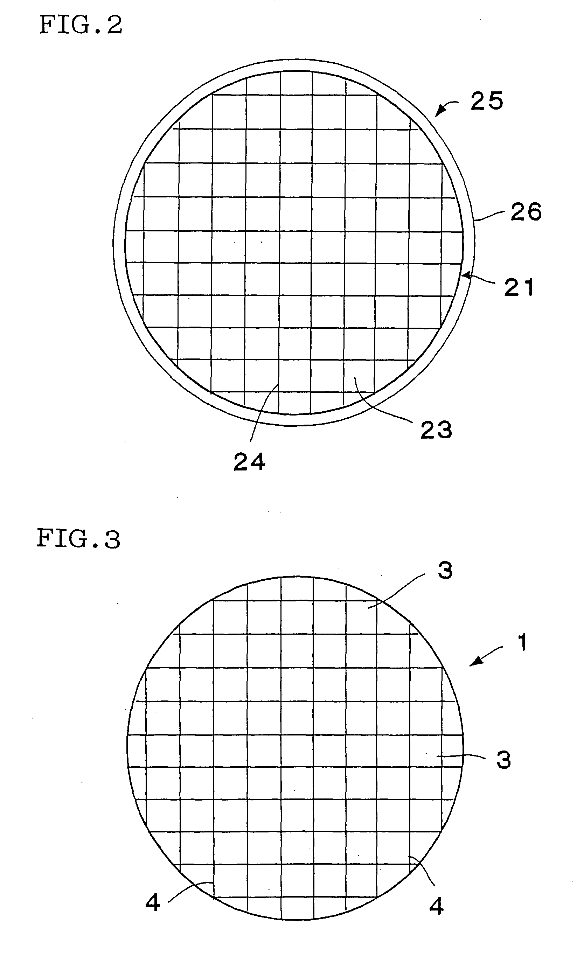

A honeycomb structured catalyst carrier of ceramics (honeycomb catalyst carrier) is used as a catalyst carrier for carrying a catalyst which reduces nitrogen oxides (NOx), carbon monoxide (CO), hydro carbons (HC), and the like in automobile exhaust gas. The honeycomb catalyst carrier is composed of a porous material having a large number of pores, and formed into a honeycomb structure having cells each functioning as a fluid passage. A catalyst can be loaded by impregnating catalyst liquid into inside the cells (partition walls separating each cell), drying and firing it.
In recent years in which regulations for exhaust gas have been the issue, a large-sized honeycomb catalyst carrier for mounting on a large-sized automobile such as a truck and a bus has been in high demand. Such a large-sized honeycomb catalyst carrier has a problem of low mechanical strength because it has honeycomb structure separated by very thin partition walls. Therefore, in a large-sized honeycomb structure such as a honeycomb catalyst carrier, a reinforcing means is disposed to improve mechanical strength and to inhibit deformation, damage, or the like, caused upon usage. For example, as shown in Fig. 2, there is proposed a method of improving mechanical strength by providing an outer wall 26 in the peripheral portion of a cell-structured body 21 of a honeycomb structure (See, e. g., JP-U-2090481B and JP2604876B).
However, the honeycomb catalyst carrier 25 having the outer wall 26 mentioned above has a problem that crack occurs at the outer wall 26, or the outer wall 26 exfoliates from the cell structure 21, in a catalyst loading process where catalyst liquid is impregnated into inside the cells 23 (the partition walls 24 separating each cell 23), dried and fired. Also the honeycomb catalyst carrier 25 has a problem that concentration distribution of a catalyst component is non-uniform in each part of the honeycomb catalyst carrier 25. To be more concrete, a catalyst near the peripheral portion of the honeycomb catalyst carrier 25 has higher concentration, while a catalyst near the central portion of the honeycomb catalyst carrier has lower concentration.

DISCLOSURE OF THE INVENTION

The present invention has been made in view of the above-mentioned problems of the prior art and aims at providing a honeycomb catalyst carrier having an outer wall which can effectively be inhibited from crack generation at the outer wall and exfoliation of the outer wall in the catalyst loading step as well as can have a uniform concentration distribution of a catalyst component in each part of the catalyst carrier and a method for production thereof.
In order to address the aforementioned problems, the inventor has earnestly studied and, as a result, found out that the aforementioned aim can be achieved by, for example, forming, in the outermost peripheral part having a predetermined thickness, of the porous material of a cell structure, an impregnated part being impregnated with a water-insoluble organic substance which disappears by burning or inorganic substance. That is, the present invention provides the following honeycomb catalyst carrier and the method for production thereof.

[1] A honeycomb catalyst carrier comprising: a honeycomb formed cell structure composed of a porous material having a large number of pores, the cell structure having cells each functioning as a fluid passage; and an outer wall composed of a porous material disposed so as to cover an outer periphery of the cell structure, wherein an impregnated part is formed in an outermost peripheral part, which has a given thickness, of the porous material of the cell structure, the impregnated part being impregnated with a water-insoluble organic material which disappears by burning or an inorganic material.
[2] The honeycomb catalyst carrier according to the above [1], wherein a permeability(k) of the impregnated part defined by the following equation (1) is lower than that of the other part of the porous material of the cell structure.

$$k = (\mu \cdot L/A)(\Delta Q/\Delta P) \qquad (1)$$

k: permeability ($\mu m^2$)

$\mu$: viscosity coefficient of air at 20 deg.C ($\mu Pa \cdot sec$)

L: thickness of sample (mm)

A: air-permeating area of sample ($cm^2$)

$\Delta Q/\Delta P$: gradient of "discharge air flow rate / compressed air pressure" ((cc/sec)/psi)

[3] A honeycomb catalyst carrier comprising: a honeycomb formed cell structure composed of a porous material having a large number of pores, the cell structure having cells each functioning as a fluid passage; and an outer wall composed of a porous material disposed so as to cover an outer periphery of the cell structure, wherein an intermediate layer of an inorganic material is formed between an outer periphery of the cell structure and an inner surface of the outer wall.

[4] The honeycomb catalyst carrier according to the above [3], wherein a permeability(k) of the intermediate layer defined by the following equation (1) is lower than that of the porous material of the cell structure.

$$k = (\mu \cdot L/A)(\Delta Q/\Delta P) \tag{1}$$

k: permeability ($\mu m^2$)

$\mu$: viscosity coefficient of air at 20 deg.C ($\mu Pa \cdot sec$)

L: thickness of sample (mm)

A: air-permeating area of sample ($cm^2$)

$\Delta Q/\Delta P$: gradient of "discharge air flow rate / compressed air pressure" ((cc/sec)/psi)

[5] The honeycomb catalyst carrier according to any one of above [1] to [4], wherein the permeability(k) of the impregnated layer or the intermediate layer is 0.7 $\mu m^2$ or less.

[6] A honeycomb catalyst carrier comprising: a honeycomb formed cell structure composed of a porous material having a large number of pores, the cell structure having cells each functioning as a fluid passage; and an outer wall composed of a porous material disposed so as to cover an outer periphery of the cell structure, wherein an impregnated part is formed in an outermost peripheral part, which has a given thickness, of the porous material of the outer wall, the impregnated part being impregnated with a water-insoluble organic material which disappears by burning or an inorganic material.

[7] The honeycomb catalyst carrier according to the above [6], wherein a permeability(k) of the impregnated part defined by the following equation (1) is lower than that of the other part of the porous material of the outer wall.

$$k = (\mu \cdot L/A)(\Delta Q/\Delta P) \tag{1}$$

k: permeability ($\mu m^2$)

$\mu$: viscosity coefficient of air at 20 deg.C ($\mu Pa \cdot sec$)

L: thickness of sample (mm)

A: air-permeating area of sample ($cm^2$)

$\Delta Q/\Delta P$: gradient of "discharge air flow rate / compressed air pressure" ((cc/sec)/psi)

[8] A honeycomb catalyst carrier comprising: a honeycomb formed cell structure composed of a porous material having a large number of pores, the cell structure having cells each functioning as a fluid passage; and an outer wall composed of a porous material disposed so as to cover an outer periphery of the cell structure, wherein the whole porous material of the outer wall is an impregnated part impregnated with a water-insoluble organic material which disappears by burning or an inorganic material.

[9] A honeycomb catalyst carrier comprising: a honeycomb formed cell structure composed of a porous material having a large number of pores, the cell structure having cells each functioning as a fluid passage; and an outer wall composed of a porous material disposed so as to cover an outer periphery of the cell structure, wherein a coat layer is formed so as to cover an outer periphery of the outer wall, the coat layer comprising a water-insoluble organic material which disappears by burning or an inorganic material.

[10] The honeycomb catalyst carrier according to the above [9], wherein a permeability(k) of the coat layer defined by the following equation (1) is lower than that of the porous material of the outer wall.

$$k = (\mu \cdot L/A)(\Delta Q/\Delta P) \tag{1}$$

k: permeability ($\mu m^2$)

$\mu$: viscosity coefficient of air at 20 deg.C ($\mu Pa \cdot sec$)

L: thickness of sample (mm)

A: air-permeating area of sample ($cm^2$)

$\Delta Q/\Delta P$: gradient of "discharge air flow rate / compressed air pressure" ((cc/sec)/psi)

[11] The honeycomb catalyst carrier according to any one of the above [6] to [10], wherein the permeability(k) of the outer wall having the impregnated part, of the whole porous material of the outer wall or of the outer wall having the coat layer is 0.04 $\mu m^2$ or less.

[12] The honeycomb catalyst carrier according to any one of the above [1], [2], [5] to [8], and [11], wherein the organic material is a petroleum hydrocarbon oil, a silicone oil, a thermoplastic resin, a thermosetting resin, a wax or a mixture thereof.

[13]. The honeycomb catalyst carrier according to any one of the above [1], [2], and [5] to [11], wherein the inorganic material is a ceramic sol, an alkylsilane compound or a mixture thereof.

[14] The honeycomb catalyst carrier according to any one of the above [3] to [5], and [9] to [11], wherein the inorganic material is one or more of ceramics.

[15] The honeycomb catalyst carrier according to any one of the above [9] to [11], wherein the organic material is a thermoplastic resin, a thermosetting resin, a wax, or a natural or synthetic rubber.

[16] A method for production of a honeycomb catalyst carrier having a honeycomb formed cell structure composed of a porous material having a large number of pores, the cell structure having cells each functioning as a fluid passage, wherein the method comprises impregnating a water-insoluble organic material which disappears by burning or an inorganic material into an outermost peripheral part, which has a given thickness, of the porous material of the cell structure to form an impregnated part; and then disposing an outer wall composed of a porous material so as to cover an outer periphery of the cell structure.

[17] A method for production of a honeycomb catalyst carrier having a honeycomb formed cell structure composed of a porous material having a large number of pores, the cell structure having cells each functioning as a fluid passage, wherein the method comprises applying an inorganic material to an outer periphery of the cell structure to form an intermediate layer; and then disposing an outer wall composed of a porous material so as to cover the intermediate layer.

[18] A method for production of a honeycomb catalyst carrier having a honeycomb formed cell structure composed of a porous material having a large number of pores, the cell structure having cells each functioning as a fluid passage, wherein the method comprises disposing an outer wall composed of a porous material so as to cover an outer periphery of the cell structure; and then impregnating a water-insoluble organic material which disappears by burning or an inorganic material into an outermost peripheral part, which has a given thickness, of the porous material of the outer wall to form an impregnated part.

[19] A method for production of a honeycomb catalyst carrier having a honeycomb formed cell structure composed of a porous material having a large number of pores, the cell structure having cells each functioning as a fluid passage, wherein the method comprises disposing an outer wall composed of a porous material so as to cover an outer periphery of the cell structure; and then impregnating a water-insoluble organic material which disappears by burning or an inorganic material into the whole porous material of the outer wall to form an impregnated part.

[20] A method for production of a honeycomb catalyst carrier having a honeycomb formed cell structure composed of a porous material having a large number of pores, the cell structure having cells each functioning as a fluid passage, wherein the method comprises disposing an outer wall composed of a porous material so as to cover an outer periphery of the cell structure; and then applying a water-insoluble organic material which disappears by burning or an inorganic material so as to cover an outer periphery of the outer wall to form a coat layer.

BRIEF DESCRIPTION OF THE DRAWINGS

Fig. 1 is a schematic sectional view showing a section along the central axis of a honeycomb catalyst carrier of the present invention.

Fig. 2 is a sectional view showing a section perpendicular to the central axis of a honeycomb structure having an outer wall.

Fig. 3 is a sectional view showing a section perpendicular to the central axis of a cell structure constituting a honeycomb catalyst carrier of the present invention.

Fig. 4 is a schematic sectional view showing a cell structure in which cells are plugged alternately by plugging portions.

Fig. 5 is a schematic sectional view showing a section along the central axis of a honeycomb catalyst carrier of the present invention.

Fig. 6 is a schematic sectional view showing a section along the central axis of a honeycomb catalyst carrier of the present invention.

Fig. 7 is a schematic sectional view showing a section along the central axis of a honeycomb catalyst carrier of the present invention.

BEST MODE FOR CARRYING OUT THE INVENTION

The embodiments of the honeycomb catalyst carrier of the present invention is specifically described below referring to the accompanying drawings.

On the occasion of developing a honeycomb catalyst carrier of the present invention, the inventor first examined causes of generation of cracks on the outer wall or exfoliation of the outer wall from the cell structure. As a result, it was found out that, because a heating body (e.g. heater) of a drier is arranged on the outer peripheral side of the honeycomb catalyst carrier in the case that a catalyst liquid impregnated into inside the cells (partition walls separating each cell) is dried in a catalyst-loading process, drying is proceeded from the peripheral side of the honeycomb catalyst carrier, and according with this, the catalyst liquid moves to the peripheral side (outer wall side) of the honeycomb catalyst carrier to cause uneven concentration distribution of a catalyst component in each part of the honeycomb catalyst carrier; and thereby a crack is generated on the outer wall or the outer wall is exfoliated from the cell structure.

To be more specific, since a catalyst concentration becomes high around the outer periphery of the honeycomb catalyst carrier, the highly concentrated catalyst component is crystallized or expanded, and thereby a crack is generated in the outer wall or the outer wall is exfoliated from the cell structure.

As described above, crack generation at the outer wall and exfoliation of the outer wall from the cell structure are caused by the movement of the catalyst liquid to the peripheral side (outer wall side) of the honeycomb catalyst carrier. Therefore, in order to inhibit such a situation, the movement of the catalyst liquid to the peripheral side (outer wall side) of the honeycomb catalyst carrier may be suppressed.

Therefore, in the present invention, an impregnated part impregnated with a water-insoluble organic material which disappears by burning or an inorganic material is formed in an outermost peripheral part, which has a given thickness, of the porous material of the cell structure constituting the honeycomb catalyst carrier. Such a constitution suppresses the movement of the catalyst liquid to the peripheral side (outer wall side) of the honeycomb catalyst carrier even if a heater of a drier is disposed on the outer peripheral side of the honeycomb catalyst carrier upon drying in a catalyst-loading process. Therefore, crack generation at the outer wall and exfoliation of the outer wall from cell structure can effectively be inhibited. In addition, as a result, this constitution enables to avoid the problem that the central portion of the honeycomb catalyst carrier has low catalyst concentration, while the peripheral portion of the honeycomb catalyst carrier has high catalyst concentration; and thereby the honeycomb catalyst carrier can have a uniform concentration distribution of a catalyst component in each part of the catalyst carrier.

(1) The first embodiment

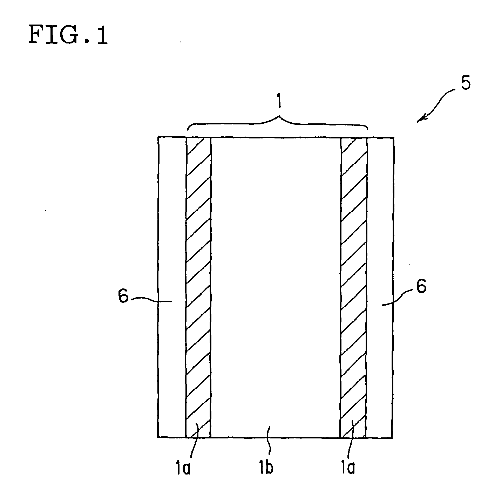

The first embodiment of the present invention is, as shown in, for example, Fig. 1, a honeycomb catalyst carrier 5, wherein an impregnated part is formed in an outermost peripheral part, which has a given thickness, of the porous material of the cell structure 1, the impregnated part being impregnated with a water-insoluble organic material which disappears by burning or an inorganic material. In such a honeycomb catalyst carrier 5, the impregnated part 1a has lower permeability than the other part 1b of the porous material of the cell structure. Incidentally, "permeability" referred to in the present invention means "permeability (k)" specified by the following formula (1) (Details of the method of measurement is described in the Examples.):

$$k = (\mu \cdot L/A)(\Delta Q/\Delta P) \qquad (1)$$

k: permeability ($\mu m^2$)
$\mu$: viscosity coefficient of air at 20 deg.C ($\mu Pa \cdot sec$)
L: thickness of sample (mm)
A: air-permeating area of sample ($cm^2$)
$\Delta Q/\Delta P$: gradient of "discharge air flow rate / compressed air pressure" ((cc/sec)/psi)

For example, as shown in Fig. 3, a cell structure 1 is formed in a honeycomb shape having a plurality of cells 3 each functioning as a fluid passage by being separated from each other by very thin partition walls 4 made of porous material having a large number of pores. There is no particular restriction as to the material of the cell structure. Generally, a sintered body of ceramics, particularly a sintered body of cordierite is preferably used because the material is required to be a porous body having a large number of pores. The sintered body of cordierite is preferable in the viewpoint of low thermal expansion coefficient as well as excellent impact resistance and mechanical strength. Such a cell structure may be produced by, for example, subjecting clay having an appropriately controlled viscosity to extrusion using an extrusion die having a given cell shape, partition wall thickness and cell density, drying and firing the resulting extrudate.

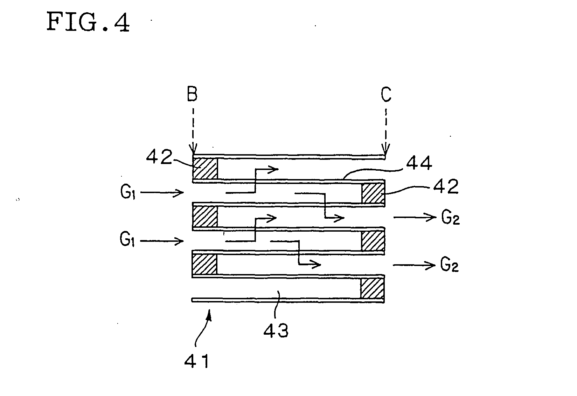

As to the cell structure, for example, shown in Fig. 4, the cell structure 41 in which the inlet end face B and the outlet end face C of the cells 43 are alternately plugged by the plugging portions 42 may be used. In the cell structure 41 having such a structure mentioned above, a gas $G_1$ to be treated is introduced into cells 43 from the inlet end face B, dust and particulates in the gas are trapped by partition walls 44; meanwhile, the gas which has entered adjacent cells 43 through the porous partition walls 44, is discharged as a treated gas $G_2$ from the outlet end face C, as a result, the treated gas $G_2$ wherein dust and particulates in the gas $G_1$ to be treated are removed can be obtained. This embodiment is preferable in the viewpoint that a function as a filter can be added to the catalyst carrier.

The honeycomb catalyst carrier of the present embodiment may be produced by impregnating a water-insoluble organic material which disappears by burning or an inorganic material into the outermost peripheral part of the porous material of the cell structure by a given thickness to form an impregnated part, subsequently disposing an outer wall composed of a porous material so as to cover an outer periphery of the cell structure.

Impregnation with an organic material has an advantage in not having an originally unnecessary residue of the organic material inside the honeycomb catalyst body (honeycomb catalyst carrier with a catalyst loaded thereon) because of disappearance of organic material by burning upon baking in a catalyst-loading step in addition to an advantage in being capable of lowering permeability of porous material of a cell structure. Further, the impregnation with an organic material is preferable in that the honeycomb catalyst body has neither more rigidity than necessary nor lowered thermal impact resistance.

The above-mentioned organic material is required to be water-insoluble for inhibiting it from solving into catalyst liquid in impregnation. It may be an organic material which disappears by burning. This is because the effect of the present invention can be obtained if the permeability is low at least upon drying (about 50 to 150 deg.C) in a catalyst-loading step because a catalyst liquid can be inhibited from moving. Therefore, even if the organic material impregnated disappears by burning upon the following baking (about 400 to 600 deg.C), no problem is caused As to the organic material mentioned above, for example, it may preferably be used that a petroleum hydrocarbon oil, a silicone oil, a thermoplastic resin such as an ethylene-vinyl acetate copolymer and polyethylene, a thermosetting resin such as a phenol resin and an epoxy resin, a wax such as a paraffin wax, an animal and vegetable wax and a synthetic wax, or a mixture thereof.

It is possible to lower the permeability of the porous material of a cell structure also by impregnation with an inorganic material instead of the above organic materials. As to the inorganic material mentioned above, for example, it may preferably be used that a ceramic sol such as a silica sol and an alumina sol, an alkyl silane compound, or a mixture thereof.

Incidentally, though impregnated part is formed in the outermost peripheral part having a given thickness of the porous material of the cell structure, the thickness of the impregnated part is not particularly limited as long as the impregnated part is formed continuously in the outermost peripheral part of the cell structure. For example, the impregnated part may be formed up to around the central part of the cell structure.

On the outer periphery of the cell structure having the above impregnated part formed is disposed an outer wall of a porous material to cover the cell structure.

The above outer wall may be disposed by a method in which a ceramic coat material for forming an outer wall is applied on the outer periphery of the cell structure, and then the ceramic coat material is dried. Here, the impregnated organic material does not disappear because of drying at relatively low temperature without firing at high temperature (about 1400 to 1450 deg.C for cordierite). However, in the case of using an inorganic material to be impregnated, drying at higher temperature may be performed. Incidentally, as a ceramic coat material for forming an outer wall, there may preferably be used a material prepared by slurrying a material containing, as the main component, a powder obtained by grinding a ceramic sintered body (particularly, a cordierite sintered body).

There is no restriction as to the thickness of the outer wall. The thickness is generally about 0.3 to 2.0 mm. When the thickness is less than 0.3 mm, it is sometimes difficult for the honeycomb catalyst carrier to maintain its strength because the outer wall is thin. When the thickness is more than 2.0 mm, thermal shock resistance is sometimes lowered because a temperature gradient is easily given inside the outer wall.

The effect of the present invention can be obtained not only by the first embodiment described above, but also by the second to fourth embodiments described below. Incidentally, in the following items, only main characteristics of each of the second to fourth embodiments will be described. The parts except for the main characteristics may be the same as in the first embodiment.

(2) The second embodiment

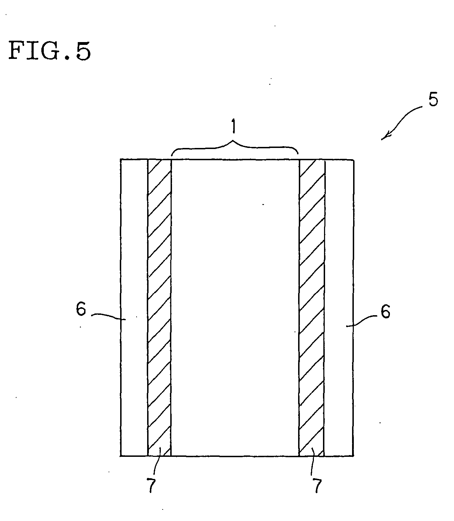

The second embodiment of the present invention is, for example, a honeycomb catalyst carrier 5 in which an intermediate layer 7 of an inorganic material is formed between the outer periphery of the cell structure 1 and an inner peripheral face of an outer wall 6 as shown in Fig. 5. That is, unlike the first embodiment in which an impregnated part is formed in a part of a cell structure, an intermediate layer is formed independently of a cell structure in the present embodiment. In such a honeycomb catalyst carrier 5, the intermediate layer 7 has lower permeability than the porous material constituting the cell structure 1.

A honeycomb catalyst carrier of the present embodiment may be formed by applying an inorganic material on an outer periphery of the cell structure to form an intermediate layer, and then disposing the outer wall of a porous material to cover the intermediate layer.

In the honeycomb catalyst carrier of the present embodiment, an intermediate layer is formed independently of the cell structure. Therefore, if the intermediate layer is constituted by an organic material which disappears by burning, the organic material disappears by burning upon baking in a catalyst-loading step, exfoliation of the outer wall from the cell structure is prone to be caused. Therefore, it is necessary to constitute the intermediate layer of the present embodiment by an inorganic material.

The inorganic material constituting the intermediate layer is not particularly limited as long as the material has lower permeability than the porous material constituting the cell structure. One or more kinds of ceramics such as silica and alumina may preferably be used. Specifically, the intermediate layer may be formed by a method in which a material containing a ceramic powder as the main component is slurried to obtain a ceramic slurry for forming an intermediate layer, the slurry is applied on the outer periphery of a cell structure, then dried, and fired if necessary.

A ceramic sol such as a silica sol and an alumina sol may be employed in order to further decrease permeability of the intermediate layer. Specifically, it is possible that a ceramic slurry or the like for forming the intermediate layer is applied on the outer periphery of the cell structure, dried, and the like, to form the intermediate layer, and then a ceramic sol is impregnated into the intermediate layer arbitrary times to further decrease the permeability.

It is preferable in the first and second embodiments described above that the impregnated part or the intermediate layer has a permeability of 0.70 $\mu m^2$ or less. When the permeability exceeds 0.70 $\mu m^2$, in some cases, movement of a catalyst liquid to the peripheral side (outer wall side) of the honeycomb catalyst carrier cannot be inhibited, and a crack may be generated at the outer wall, or the outer wall is exfoliated from the cell structure. Incidentally, a porous material constituting the cell structure generally has a permeability of about 0.8 to 5.0 $\mu m^2$.

(3) The third embodiment

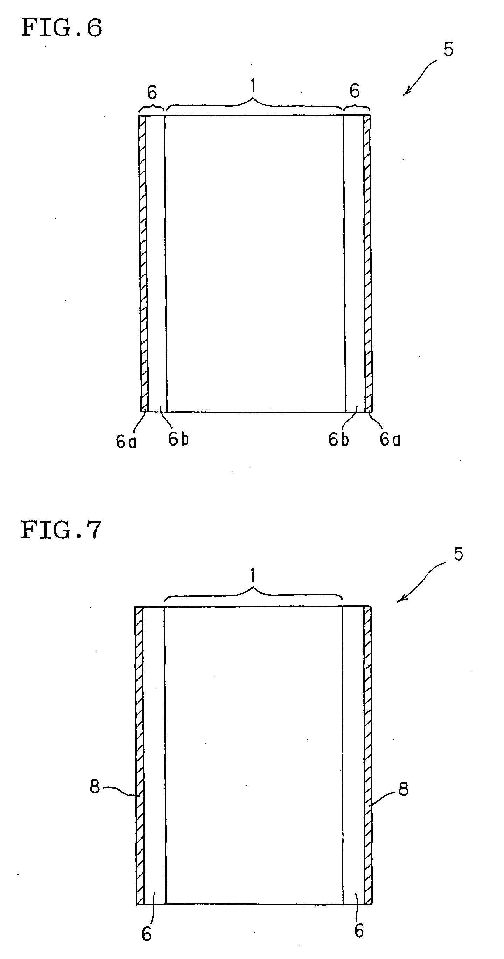

The third embodiment of the present invention is, for example, a honeycomb catalyst carrier 5, wherein an impregnated part 6a where a water-insoluble organic material which disappears by burning or an inorganic material is formed in the outermost peripheral part having a predetermined thickness within the porous material constituting the outer wall 6 as shown in Fig. 6. That is, unlike the first embodiment in which an impregnated part is formed in a part of a cell structure, an impregnated part is formed in a part of the outer wall in the present embodiment. In such a honeycomb catalyst carrier 5, the impregnated part 6a has lower permeability than the other part 6b of a porous material constituting the outer wall 6.

The honeycomb catalyst carrier of the present embodiment may be produced by disposing an outer wall composed of a porous material so as to cover an outer periphery of the cell structure, subsequently impregnating a water insoluble-organic material which disappears by burning or an inorganic material into the outermost peripheral part of the porous material of the outer wall by a given thickness to form an impregnated part.

In the third embodiment, the whole porous material of the outer wall maybe the impregnated part impregnated with a water insoluble organic material which disappears by burning or an inorganic material. Such a honeycomb catalyst carrier may be produced by disposing an outer wall composed of a porous material so as to cover an outer periphery of the cell structure, subsequently impregnating a water insoluble organic material which disappears by burning or an inorganic material into the whole part of the porous material of the outer wall to form an impregnated part.

As to the organic material mentioned above, the same material as in the first embodiment may be preferably used. That is, for example, a petroleum hydrocarbon oil, a silicone oil, a thermoplastic resin such as an ethylene-vinyl acetate copolymer and polyethylene, a thermosetting resin such as a phenol resin and an epoxy resin, a wax such as a paraffin wax, an animal and vegetable wax and a synthetic wax, or a mixture thereof. As to the inorganic material mentioned above, the same material as in the first embodiment may be preferably used. That is, for example, a ceramic sol such as a silica sol and an alumina sol, an alkyl silane compound, or a mixture thereof.

Incidentally, the impregnated part is formed in the outermost peripheral part having a given thickness or in the whole the porous material constituting the outer wall. Either of them is available as long as the impregnated part is formed continuously in the outermost peripheral part of the outer wall.

(4) The fourth embodiment

The fourth embodiment of the present invention is, for example, a honeycomb catalyst carrier 5 in which a coat layer composed of a water-insoluble organic material which disappears by burning or an inorganic material is formed so as to cover the outer periphery of the outer wall 6 as shown in Fig. 7. That is, unlike the third embodiment in which an impregnated part is formed in a part of the outer wall or in the whole outer wall, a coat layer is formed independently of the outer wall in the present embodiment. In such a honeycomb catalyst carrier 5, the coat layer 8 has lower permeability than the porous material constituting the outer wall 6.

The honeycomb catalyst carrier of the present embodiment may be produced by disposing an outer wall composed of a porous material so as to cover an outer periphery of the cell structure, subsequently applying a water-insoluble organic material which disappears by burning or an inorganic material so as to cover an outer periphery of the outer wall to form a coat layer.

As to the organic material of the coat layer, it may be preferably used that a thermoplastic resin such as an ethylene-vinyl acetate copolymer and polyethylene, a thermosetting resin such as a phenol resin and an epoxy resin, a wax such as a paraffin wax, an animal and vegetable wax and a synthetic wax, or a natural and synthetic rubber, specifically natural rubber (latex). The coat layer may be formed by applying the organic material to the outer periphery of the outer wall.

The inorganic material constituting a coat layer is not particularly limited as long as the inorganic material has lower permeability than the porous material constituting the outer wall. One or more kinds of ceramics such as silica and alumina may preferably be used. Specifically, the coat layer may be formed by a method in which a material containing a ceramic powder as the main component is slurried to obtain a ceramic slurry for forming a coat layer, the slurry is applied on the outer periphery of a cell structure, then dried, and fired if necessary. A ceramic sol such as a silica sol and an alumina sol may be employed in order to further decrease permeability of the coat layer. Specifically, it is possible that a ceramic slurry or the like for forming the coat layer is applied on the outer periphery of the cell structure, dried, and the like, to form the coat layer, and then a ceramic sol is impregnated into the coat layer arbitrary times to further decrease the permeability.

It is preferable in the third and fourth embodiments described above that the outer wall including the impregnated part, the whole porous material constituting the outer wall, or the outer wall having a coat layer thereon has a permeability of $0.04 \mu m^2$ or less. When the permeability exceeds $0.04 \ \mu m^2$, in some cases movement of a catalyst liquid to the peripheral side (outer wall side) of the honeycomb catalyst carrier cannot be inhibited, and a crack may be generated at the outer wall, or the outer wall may be exfoliated from the cell structure. Incidentally, a porous material constituting the outer wall generally has a permeability of about 0.045 to 0.1 $\mu m^2$.

The present invention will concretely be described hereinafter in terms of examples. However the present invention is not limited to these examples.

[Production of a cell structure]

First, a cell structure was produced by the following method. A cell structure (formed and dried body) was produced by adding a forming aid, a pore-forming agent and water to a raw material for cordierite obtained by mixing talc, kaolin, alumina and silica so as to give a theoretical composition of cordierite ($2MgO \cdot 2Al_2O_3 \cdot 5SiO_2$), kneading them to obtain clay, extruding the clay into the cell structure, and drying the cell structure. A plugging material is introduced to this formed and dried body from the openings of a plurality of cells and dried to obtain a cell structure (formed and dried body) in which the inlet end face B and the outlet end face C of a plurality of cells were alternately plugged by a plugging material (see Fig. 4). This cell structure (formed and dried body) was fired to obtain a sintered body, and then the outer periphery of the sintered body was removed by grinding to adjust the outer diameter to obtain a cell structure having 270 mm in the outer diameter. Incidentally, this cell structure had a length of 305 mm, with partition walls having a thickness of 0.3 mm and a cell pitch of 1.5 mm.

[Production of a honeycomb catalyst carrier]

(Comparative Example 1)

A honeycomb structure was obtained by applying a ceramic coat material (slurry prepared by slurrying a material containing, as the main component, a powder obtained by grinding a cordierite sintered body) for forming an outer wall on the outer periphery of the above cell structure and drying the ceramic coat material to cure it. The thickness of the outer wall was 0.75 mm. As shown in Table 1, the cell structure had a permeability of 0.99 $\mu m^2$, and the outer wall had a permeability of 0.045 $\mu m^2$.

Table 1

| | Impregnated part of cell structure | Impregnated part of outer wall | Coat layer of outer wall | Catalyst component concentration (%) | | Exfoliation/crack of outer wall | | Cell structure Cell structure + impregnated part | Outer wall Outer wall + impregnated part / coat layer |
|---|---|---|---|---|---|---|---|---|---|
| | | | | Central part of base material | Outer wall | Exfoliation | Crack | Permeability k ($\mu m^2$) | Permeability k ($\mu m^2$) |
| Comp. Ex. 1 | - | - | - | 0.8 | 9.5 | Several part | Large | 0.99 | 0.045 |
| Example 1 | Silicone oil | - | - | 3.8 | 2.0 | None | Small | 0.55 | - |
| Example 2 | Petroleum hydrocarbon oil | - | - | 3.8 | 1.8 | None | Small | 0.51 | - |
| Example 3 | Silica sol | - | - | 3.1 | 2.5 | None | Small | 0.62 | - |
| Example 4 | Paraffin wax | - | - | 4.2 | 1.7 | None | Small | 0.45 | - |
| Example 5 | - | Silicone oil | - | 4.5 | 1.8 | None | None | - | 0.008 |
| Example 6 | - | Petroleum hydrocarbon oil | - | 4.7 | 1.5 | None | None | - | 0.007 |
| Example 7 | - | Silica sol | - | 4.0 | 2.1 | None | Minute | - | 0.010 |
| Example 8 | - | Alkylsilane compound | - | 3.6 | 2.2 | None | Minute | - | 0.028 |
| Example 9 | - | - | Natural rubber (latex) | 4.8 | 1.2 | None | None | - | 0.009 |

(Examples 1 to 4)

An impregnated part was formed by impregnating a cell structure by applying, on the whole outer periphery of the aforementioned cell structure, a silicone oil (Commercial name: Dimethyl silicone oil / KF96-1000CS, produced by Shin-Etsu Chemical Co., Ltd., Example 1), a petroleum hydrocarbon oil (Commercial name: Diana process oil / paraffin based PW-90, produced by Idemitsu Kosan Co., Ltd., Example 2), a silica sol (Commercial Name: Snowtex 40, produced by Nissan Chemical Industries, Ltd., Example 3), a paraffin wax (Commercial name: SP-3035, Melting point of 60 deg.C, produced by Nippon Seiro Co.,Ltd, Example 4). Since the paraffin wax was solid, it was heated up to 70 deg.C to a liquid form, and then the application was performed.

Subsequently, a ceramic coat material (slurry prepared by slurrying a material containing, as the main component, a powder obtained by grinding a cordierite sintered body) for forming an outer wall was applied on the outer periphery of the cell structure and dried to cure it to obtain a honeycomb catalyst carrier. The thickness of the outer wall was 0.75 mm. As shown in Fig. 1, the cell structures having an impregnated part had permeabilities of $0.55\mu m^2$, $0.51\mu m^2$, $0.62\mu m^2$, and $0.45\mu m^2$, respectively; all of which were lower than $0.99\mu m^2$ of the Comparative Example 1, in which an impregnated part was not formed.

(Examples 5 to 8)

A ceramic coat material (slurry prepared by slurrying a material containing, as the main component, a powder obtained by grinding a cordierite sintered body) for forming an outer wall was applied on the outer periphery of the above cell structure and dried to cure it. The thickness of the outer wall was 0.75 mm. Then, a honeycomb catalyst carrier was obtained by forming an impregnated part by impregnating a cell structure by applying, on the whole outer periphery of the outer wall, a silicone oil (Commercial name: Dimethyl silicone oil / KF96-1000CS, produced by Shin-Etsu Chemical Co., Ltd., Example 5), a petroleum hydrocarbon oil (Commercial name: Diana Process Oil / paraffin based PW-90, produced by Idemitsu Kosan Co., Ltd., Example 6), a silica sol (Commercial Name: Snowtex 40, produced by Nissan Chemical Industries, Ltd., Example 7), an alkylsilane compound (Commercial name: Protect Gel WS 405, supplied by Degussa Japan, Example 8). As shown in Table 1, the outer walls having an impregnated part had permeabilities of $0.008 \mu m^2$, $0.007 \mu m^2$, $0.010 \mu m^2$, and $0.028 \mu m^2$, respectively; all of which were lower than $0.045 \mu m^2$ of the Comparative Example 1, in which an impregnated part was not formed.

(Example 9)

A ceramic coat material (slurry prepared by slurrying a material containing, as the main component, a powder obtained by grinding a cordierite sintered body) for forming an outer wall was applied on the outer periphery of the above cell structure and dried to cure it. The thickness of the outer wall was 0.75 mm. Then, a honeycomb catalyst carrier was obtained by applying a natural rubber (latex) (Commercial name: HYLATEX-HA / high-ammonia type, produced by Nomura Trading Co., Ltd.) on the whole outer periphery of the outer wall to adhere to the outer wall to form a coat layer having a thickness of 0.2 mm. As shown in Fig. 1, the outer wall having a coat layer thereon had a permeability of $0.009 \mu m^2$, which was lower than $0.045 \mu m^2$ of Comparative Example 1, in which a coat layer was not formed.

[Measurement of permeability]

The honeycomb catalyst carriers of Comparative Example 1 and Examples 1 to 9 were measured for permeability by the following method using a capillary flow promoter.

First, there were prepared a measurement sample having a diameter of 30 mm and a thickness of 0.3 mm of the cell structure and its impregnated part for each of the Comparative Example 1 and Examples 1 to 4, and a measured sample having a diameter of 30 mm and a thickness of 0.8 mm of the outer wall and its impregnated part for each of the Comparative Example 1 and Examples 5 to 9.

Then, each sample was held by O-rings having a diameter of 20 mm from the upper and lower sides to be sealed lest compressed air should leak. Further, compressed air was introduced in each sample from the lower side (The pressure was gradually raised in the range of 0 to 1 psi.) to measure the air-flow rate ($\Delta Q$: discharged air-flow rate) of the air flowing out of the upper side of each sample. The results of the measurement were applied to the following formula (1) to calculate permeability k ($\mu m^2$). Incidentally, $\mu$ was 18.24 ($\mu Pa\cdot sec$), L was 0.3 (mm) or 0.8 (mm), and A was 3.142 ($cm^2$) (since the O-ring had an outer diameter of 20 mm). The results are shown in Table 1.

$$k = (\mu\cdot L/A)(\Delta Q/\Delta P) \qquad\qquad (1)$$

k: permeability ($\mu m^2$)

$\mu$: viscosity coefficient of air at 20 deg.C ($\mu Pa \cdot sec$)

L: thickness of sample (mm)

A: air-permeating area of sample ($cm^2$)

$\Delta Q/\Delta P$: gradient of "discharge air flow rate / compressed air pressure" ((cc/sec)/psi)

Incidentally, with regard to $\Delta Q/\Delta P$, that is, gradient of "discharge air flow rate / compressed air pressure" ((cc/sec)/psi), a correlation between a pressure of air introduced from the lower side of each sample (The pressure was gradually raised in the range of 0 to 1 psi.) and a flow-rate of air discharged from the upper side of each sample was measured, and a gradient within the range where a pressure of introduced air and a discharged air-flow rate are proportional to each other and one changes linearly with the other was defined as $\Delta Q/\Delta P$: gradient of "discharge air flow rate / compressed air pressure" ((cc/sec)/psi). In addition, "psi", which is a unit for air pressure, means pound/$in^2$, that is, 1 psi = 6894.76 Pa.

[Catalyst loading]

Each of the above honeycomb catalyst carriers of Comparative Example 1 and Examples 1 to 9 was impregnated with a catalyst liquid (a nitrate aqueous solution having a concentration of 25%, which is disclosed in JP-10-128118A or the like), and the catalyst liquid was dried in a constant temperature drier at 110 deg.C, and baked in an electric furnace at 550 deg.C to load a catalyst component on partition walls separating the cells from each other of the honeycomb catalyst carrier. Then, samples were cut out of the central part of the cell structure and the outer wall, each sample was subjected to an inductively coupled plasma emission spectrometry to measure (determine) a concentration of the catalyst component. The results are shown in Table 1.

[Result]

(Comparative Example 1)

As shown in Table 1, the central part of the cell structure, which contributes to an exhaust gas purification performance, had a low concentration of the catalyst component; while the outer wall, which does not contribute to an exhaust gas purification performance, had a high concentration. That is, the honeycomb catalyst carrier had an uneven concentration of the catalyst component. In addition, a large number of cracks at the outer wall and exfoliations of the outer wall were generated.

(Examples 1 to 4)

As shown in Table 1, the concentration of the catalyst component in the central portion of the cell structure, which contributes to an exhaust gas purification performance, could be inhibited from decreasing, and the concentration of the catalyst component in the outer wall, which does not contribute to an exhaust gas purification performance, could be lowered. That is, the honeycomb catalyst carrier could have a uniform concentration distribution in each part thereof. Further, no exfoliation of the outer wall was found, and crack generation at the outer wall could sharply be inhibited. That is, crack generation at the outer wall and exfoliation of the outer wall were effectively inhibited.

(Examples 5 to 8)

As shown in Table 1, the concentration of the catalyst component in the central portion of the cell structure, which contributes to an exhaust gas purification performance, could be inhibited from decreasing, and the concentration of the catalyst component in the outer wall, which does not contribute to an exhaust gas purification performance, could be lowered. That is, the honeycomb catalyst carrier could have a uniform concentration distribution in each part thereof. Further, no exfoliation of the outer wall was found, and crack generation at the outer wall could sharply be inhibited. That is, crack generation at the outer wall and exfoliation of the outer wall were effectively inhibited.

(Example 9)

As shown in Table 1, the concentration of the catalyst component in the central portion of the cell structure, which contributes to an exhaust gas purification performance, could be inhibited from decreasing, and the concentration of the catalyst component in the outer wall, which does not contribute to an exhaust gas purification performance, could be lowered. That is, the honeycomb catalyst carrier could have a uniform concentration distribution in each part thereof. Further, neither exfoliation of the outer wall nor crack generation at the outer wall was not found. That is, crack generation at the outer wall and exfoliation of the outer wall were effectively inhibited.

INDUSTRIAL APPLICABILITY

As described above, in the honeycomb catalyst carrier of the present invention, since an impregnated part being impregnated with a water-insoluble organic substance which disappears by burning or inorganic substance is formed in the outermost peripheral part having a predetermined thickness, of the porous material of a cell structure, or the like, crack generation at the outer wall and exfoliation of the outer wall can effectively be inhibited in the catalyst loading step, and the honeycomb catalyst carrier can have a uniform concentration distribution of a catalyst component in each part thereof.

**Claims**

1. A honeycomb catalyst carrier comprising:

    a honeycomb formed cell structure composed of a porous material having a large number of pores, the cell structure having cells each functioning as a fluid passage; and
    an outer wall composed of a porous material disposed so as to cover an outer periphery of the cell structure,

    wherein an impregnated part is formed in an outermost peripheral part, which has a given thickness, of the porous material of the cell structure, the impregnated part being impregnated with a water-insoluble organic material which disappears by burning or an inorganic material.

2. The honeycomb catalyst carrier according to claim 1, wherein a permeability (k) of the impregnated part defined by the following equation (1) is lower than that of the other part of the porous material of the cell structure.

$$k = (\mu \cdot L/A)(\Delta Q/\Delta P) \qquad (1)$$

k: permeability ($\mu m^2$)
$\mu$: viscosity coefficient of air at 20 deg.C ($\mu Pa \cdot sec$)
L: thickness of sample (mm)
A: air-permeating area of sample ($cm^2$)
$\Delta Q/\Delta P$: gradient of "discharge air flow rate / compressed air pressure" ((cc/sec)/psi)

3. A honeycomb catalyst carrier comprising:

    a honeycomb formed cell structure composed of a porous material having a large number of pores, the cell structure having cells each functioning as a fluid passage; and
    an outer wall composed of a porous material disposed so as to cover an outer periphery of the cell structure,

    wherein an intermediate layer of an inorganic material is formed between an outer periphery of the cell structure and an inner surface of the outer wall.

4. The honeycomb catalyst carrier according to claim 3, wherein a permeability(k) of the intermediate layer defined by the following equation (1) is lower than that of the porous material of the cell structure.

$$k = (\mu \cdot L/A)(\Delta Q/\Delta P) \qquad (1)$$

k: permeability ($\mu m^2$)
$\mu$: viscosity coefficient of air at 20 deg.C ($\mu Pa \cdot sec$)
L: thickness of sample (mm)
A: air-permeating area of sample ($cm^2$)
$\Delta Q/\Delta P$: gradient of "discharge air flow rate / compressed air pressure" ((cc/sec)/psi)

5. The honeycomb catalyst carrier according to any one of claims 1 to 4, wherein the permeability(k) of the impregnated part or the intermediate layer is 0.7 $\mu m^2$ or less.

6. A honeycomb catalyst carrier comprising:

a honeycomb formed cell structure composed of a porous material having a large number of pores, the cell structure having cells each functioning as a fluid passage;
and an outer wall composed of a porous material disposed so as to cover an outer periphery of the cell structure,

wherein an impregnated part is formed in an outermost peripheral part, which has a given thickness, of the porous material of the outer wall, the impregnated part being impregnated with a water-insoluble organic material which disappears by burning or an inorganic material.

7. The honeycomb catalyst carrier according to claim 6, wherein a permeability (k) of the impregnated part defined by the following equation (1) is lower than that of the other part of the porous material of the outer wall.

$$k = (\mu \cdot L/A)(\Delta Q/\Delta P) \tag{1}$$

k: permeability ($\mu m^2$)
$\mu$: viscosity coefficient of air at 20 deg.C ($\mu Pa \cdot sec$)
L: thickness of sample (mm)
A: air-permeating area of sample ($cm^2$)
$\Delta Q/\Delta P$: gradient of "discharge air flow rate / compressed air pressure" ((cc/sec)/psi)

8. A honeycomb catalyst carrier comprising:

a honeycomb formed cell structure composed of a porous material having a large number of pores, the cell structure having cells each functioning as a fluid passage; and
an outer wall composed of a porous material disposed so as to cover an outer periphery of the cell structure,

wherein the whole porous material of the outer wall is an impregnated part impregnated with a water-insoluble organic material which disappears by burning or an inorganic material.

9. A honeycomb catalyst carrier comprising:

a honeycomb formed cell structure composed of a porous material having a large number of pores, the cell structure having cells each functioning as a fluid passage; and
an outer wall composed of a porous material disposed so as to cover an outer periphery of the cell structure,

wherein a coat layer is formed so as to cover an outer periphery of the outer wall, the coat layer comprising a water-insoluble organic material which disappears by burning or an inorganic material.

10. The honeycomb catalyst carrier according to claim 9, wherein a permeability(k) of the coat layer defined by the following equation (1) is lower than that of the porous material of the outer wall.

$$k = (\mu \cdot L/A)(\Delta Q/\Delta P) \tag{1}$$

k: permeability ($\mu m^2$)
$\mu$: viscosity coefficient of air at 20 deg.C ($\mu Pa \cdot sec$)
L: thickness of sample (mm)
A: air-permeating area of sample ($cm^2$)
$\Delta Q/\Delta P$: gradient of "discharge air flow rate / compressed air pressure" ((cc/sec)/psi)

11. The honeycomb catalyst carrier according to any one of claims 6 to 10, wherein the permeability(k) of the outer wall having the impregnated part, of the whole porous material of the outer wall or of the outer wall having the coat layer is 0.04 $\mu m^2$ or less.

12. The honeycomb catalyst carrier according to any one of claims 1, 2, 5 to 8, and 11, wherein the organic material is a petroleum hydrocarbon oil, a silicone oil, a thermoplastic resin, a thermosetting resin, a wax or a mixture thereof.

13. The honeycomb catalyst carrier according to any one of claims 1, 2, and 5 to 11, wherein the inorganic material is a ceramic sol, an alkylsilane compound or a mixture thereof.

14. The honeycomb catalyst carrier according to any one of claims 3 to 5, and 9 to 11, wherein the inorganic material is one or more of ceramics.

15. The honeycomb catalyst carrier according to any one of claims 9 to 11, wherein the organic material is a thermoplastic resin, a thermosetting resin, a wax, or a natural or synthetic rubber.

16. A method for production of a honeycomb catalyst carrier having a honeycomb formed cell structure composed of a porous material having a large number of pores, the cell structure having cells each functioning as a fluid passage, wherein the method comprises impregnating:

    a water-insoluble organic material which disappears by burning or an inorganic material into an outermost peripheral part, which has a given thickness, of the porous material of the cell structure to form an impregnated part; and then

    disposing an outer wall composed of a porous material so as to cover an outer periphery of the cell structure.

17. A method for production of a honeycomb catalyst carrier having a honeycomb formed cell structure composed of a porous material having a large number of pores, the cell structure having cells each functioning as a fluid passage, wherein the method comprises:

    applying an inorganic material to an outer periphery of the cell structure to form an intermediate layer; and then disposing an outer wall composed of a porous material so as to cover the intermediate layer.

18. A method for production of a honeycomb catalyst carrier having a honeycomb formed cell structure composed of a porous material having a large number of pores, the cell structure having cells each functioning as a fluid passage, wherein the method comprises:

    disposing an outer wall composed of a porous material so as to cover an outer periphery of the cell structure; and then

    impregnating a water-insoluble organic material which disappears by burning or an inorganic material into an outermost peripheral part, which has a given thickness, of the porous material of the outer wall to form an impregnated part.

19. A method for production of a honeycomb catalyst carrier having a honeycomb formed cell structure composed of a porous material having a large number of pores, the cell structure having cells each functioning as a fluid passage, wherein the method comprises:

    disposing an outer wall composed of a porous material so as to cover an outer periphery of the cell structure; and then

    impregnating a water-insoluble organic material which disappears by burning or an inorganic material into the whole porous material of the outer wall to form an impregnated part.

20. A method for production of a honeycomb catalyst carrier having a honeycomb formed cell structure composed of a porous material having a large number of pores, the cell structure having cells each functioning as a fluid passage, wherein the method comprises:

    disposing an outer wall composed of a porous material so as to cover an outer periphery of the cell structure; and then

    applying a water-insoluble organic material which disappears by burning or an inorganic material so as to cover an outer periphery of the outer wall to form a coat layer.

FIG.1

FIG.2

FIG.3

FIG.4

FIG.5

FIG.6

FIG.7

## INTERNATIONAL SEARCH REPORT

| International application No. |
|---|
| PCT/JP03/11309 |

**A. CLASSIFICATION OF SUBJECT MATTER**
Int.Cl$^7$ B01J35/04, B01J32/00, B01J37/00, B01D53/86

According to International Patent Classification (IPC) or to both national classification and IPC

**B. FIELDS SEARCHED**

Minimum documentation searched (classification system followed by classification symbols)
Int.Cl$^7$ B01J21/00-38/74, B01D53/86, B01D53/94

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | EP 283224 A1 (NGK INSULATORS, LTD.), 21 September, 1988 (21.09.88), Claim 1 & Microfilm of the specification and drawings annexed to the request of Japanese Utility Model Application No. 37125/1987(Laid-open No. 144836/1988) Claim 1 & US 4840827 A | 1-20 |
| A | EP 449556 A2 (NGK INSULATORS, LTD.), 02 October, 1991 (02.10.91), Claim 1 & JP 3-275309 A Claim 1 & US 5188779 A | 1-20 |

[X] Further documents are listed in the continuation of Box C.  [ ] See patent family annex.

| | |
|---|---|
| \* Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 25 November, 2003 (25.11.03) | 09 December, 2003 (09.12.03) |

| Name and mailing address of the ISA/ <br> Japanese Patent Office | Authorized officer |
|---|---|
| Facsimile No. | Telephone No. |

Form PCT/ISA/210 (second sheet) (July 1998)

**EP 1 543 876 A1**

<table>
<tr><td colspan="3" align="center">**INTERNATIONAL SEARCH REPORT**</td><td>International application No.<br>PCT/JP03/11309</td></tr>
<tr><td colspan="4">C (Continuation). DOCUMENTS CONSIDERED TO BE RELEVANT</td></tr>
<tr><td>Category*</td><td colspan="2">Citation of document, with indication, where appropriate, of the relevant passages</td><td>Relevant to claim No.</td></tr>
<tr><td align="center">A</td><td colspan="2">EP 965735 A2 (NGK INSULATORS, LTD.),<br>22 December, 1999 (22.12.99),<br>Claims 1, 2, 7<br>& JP 2000-809 A<br>Claims 1, 2, 7<br>& US 2002/22109 A1</td><td align="center">1-20</td></tr>
<tr><td align="center">A</td><td colspan="2">US 2002/4454 A1 (DOMESLE, Rainer),<br>10 January, 2002 (10.01.02),<br>Claims 1, 6<br>& JP 2002-11353 A<br>Claims 1, 6<br>& EP 1153659 A1</td><td align="center">1-20</td></tr>
<tr><td align="center">A</td><td colspan="2">Microfilm of the specification and drawings annexed<br>to the request of Japanese Utility Model Application<br>No. 113034/1985(Laid-open No. 22823/1987)<br>(Toshiba Corp.),<br>12 February, 1987 (12.02.87),<br>Claim 1<br>(Family: none)</td><td align="center">1-20</td></tr>
</table>